# EUROPEAN PATENT SPECIFICATION

(11) **EP 2 554 585 B1**
(45) Date of publication and mention of the grant of the patent: **15.04.2015**
(21) Application number: 12176828.7
(22) Date of filing: 18.07.2012
(51) Int. Cl.: C08K 3/22, C08L 83/04, C08K 3/36

(54) **Silicone Rubber Composition Having Excellent Heat Resistance**
Silikongummizusammensetzung mit ausgezeichneter Wärmebeständigkeit
Composition de caoutchouc en silicone ayant une excellente résistance à la chaleur

(30) Priority: 03.08.2011 JP 2011170539
(43) Date of publication of application: 06.02.2013
(73) Proprietor: SHIN-ETSU CHEMICAL CO., LTD, Tokyo (JP)
(72) Inventor: Hayashida, Osamu, Annaka-shi, Gunma (JP); Oishi, Kazuhiro, Annaka-shi, Gunma (JP); Kashima, Atsuhito, Annaka-shi, Gunma (JP)
(74) Representative: von Füner, Nicolai

(56) References cited:
- EP-A1- 1 557 446
- DATABASE WPI Week 200814 Thomson Scientific, London, GB; AN 2008-B86525 XP002684365, & JP 2007 326735 A (ASAHI GLASS CO LTD) 20 December 2007 (2007-12-20)

## Description

### BACKGROUND OF THE INVENTION

### 1. Field of the Invention

The present invention relates to a silicone rubber composition having excellent heat resistance.

### 2. Description of the Prior Art

Silicone rubbers exhibit excellent weather resistance and electrical properties, have a low compression set, and exhibit superior properties of heat resistance and cold resistance and the like, and are consequently widely used in all manner of fields, including electrical machinery, automobiles, construction, medical treatment and foodstuffs. For example, silicone rubbers are used for the rubber contacts which function as rubber contact points in remote controllers, type writers, word processors, computer terminals and musical instruments and the like, for construction gaskets, for the rollers used in office equipment, such as fixing rollers, developing rollers, transfer rollers, charge rollers and paper-feed rollers, for anti-vibration rubbers in audio devices and the like, for packing used in compact discs, and for coating materials for electrical wires and the like. It is known that the heat resistance of silicone rubbers can be further improved by adding additives such as cerium oxide, cerium hydroxide, iron oxide and carbon black (for example, see JP 52-14654 A (Patent Document 1), JP 60-173050 A (Patent Document 2), JP 05-186699 A (Patent Document 3), JP 06-316690 A (Patent Document 4), JP 07-11010 A (Patent Document 5), JP 11-60955 A (Patent Document 6), JP 11-279312 A (Patent Document 7), JP 2000-212444 A (Patent Document 8), and JP 2002-179917 A (Patent Document 9)), but the improvement achieved is insufficient to meet recent more stringent requirements.
Patent Document 1: JP 52-14654 A
Patent Document 2: JP 60-173050 A
Patent Document 3: JP 05-186699 A
Patent Document 4: JP 06-316690 A
Patent Document 5: JP 07-11010 A
Patent Document 6: JP 11-60955 A
Patent Document 7: JP 11-279312 A
Patent Document 8: JP 2000-212444 A
Patent Document 9: JP 2002-179917 A

### SUMMARY OF THE INVENTION

The present invention has been developed in light of the above circumstances, and has an object of providing a silicone rubber composition that generates a silicone rubber having excellent heat resistance which, even when exposed to high temperatures, undergoes minimal change in physical properties such as hardness, tensile strength, and breaking elongation.

As a result of intensive investigation aimed at achieving the above object, the inventors of the present invention discovered that a silicone rubber composition containing an organopolysiloxane having a polymerization degree of at least 100 and containing at least two alkenyl groups bonded to silicon atoms, a reinforcing silica having a specific surface area (BET method) of at least 50 m²/g, a zirconia-ceria solid solution, and a curing agent yielded a rubber which, even when exposed to high temperatures, was resistant to any deterioration in its physical properties, and they were therefore able to complete the present invention.

In other words, the present invention provides a silicone rubber composition having excellent heat resistance comprising:
(A) 100 parts by mass of an organopolysiloxane having a polymerization degree of at least 100 and containing at least two alkenyl groups bonded to silicon atoms within each molecule,
(B) 10 to 100 parts by mass of a reinforcing silica having a specific surface area measured by the BET method of at least 50 m²/g,
(C) 0.01 to 10 parts by mass of a zirconia-ceria solid solution, and
(D) an effective amount of a curing agent composed of
   (D1) an organic peroxide in an amount within a range from 0.1 to 10 parts by mass relative to 100 parts by mass of the component (A), or
   (D2) a combination of an organohydrogenpolysiloxane and a platinum group metal-based catalyst, wherein the organohydrogenpolysiloxane contains at least two hydrogen atoms bonded to silicon atoms within each molecule and is included in an amount which provides a molar ratio of the hydrogen atoms bonded to silicon atoms within the organohydrogenpolysiloxane relative to the alkenyl groups bonded to silicon atoms within the component (A) within a range from 0.5 to 5, and wherein the amount of the platinum group metal-based catalyst, reported as a mass of the platinum group metal atoms relative to the mass of the organopolysiloxane of the component (A), is within a range from 1 to 2,000 ppm.

The present invention is able to provide a silicone rubber composition that generates a silicone rubber having excellent heat resistance. The silicone rubber exhibits excellent durability even under high temperature, and undergoes minimal change in its physical properties such as hardness, tensile strength and breaking elongation even when exposed to high temperatures.

### DETAILED DESCRIPTION OF THE PREFERRED EMBODIMENTS

The present invention is described below in further detail.

### [Component (A)]

The component (A) functions as the main constituent (base polymer) of the silicone rubber composition of the present invention, and is an organopolysiloxane having a polymerization degree of at least 100 and containing at least two alkenyl groups bonded to silicon atoms. Representative examples of the component (A) can be represented by an average composition formula (I) shown below.

RₐSiO_{(4-a)/2} (I)

In the formula, R represents identical or different, unsubstituted or substituted monovalent hydrocarbon groups, and a represents a positive number within a range from 1.95 to 2.05.

In the average composition formula (I), R typically represents an unsubstituted or substituted monovalent hydrocarbon group of 1 to 20 carbon atoms, preferably 1 to 12 carbon atoms, and more preferably 1 to 8 carbon atoms. Examples of the unsubstituted or substituted monovalent hydrocarbon group represented by R include alkyl groups such as a methyl group, ethyl group, propyl group and butyl group, cycloalkyl groups such as a cyclohexyl group, alkenyl groups such as a vinyl group, allyl group, butenyl group and hexenyl group, aryl groups such as a phenyl group and tolyl group, aralkyl groups such as a phenylethyl group and β-phenylpropyl group, and groups in which some or all of the hydrogen atoms bonded to carbon atoms within one of these groups have each been substituted with a halogen atom or a cyano group or the like, such as a chloromethyl group, trifluoropropyl group and cyanoethyl group. A methyl group, vinyl group, phenyl group or 3,3,3-trifluoropropyl group is preferred, and a methyl group or vinyl group is more preferable. Among the unsubstituted or substituted monovalent hydrocarbon groups represented by R within the molecule, at least two groups must be alkenyl groups, and it is preferable that 0.0001 to 20 mol%, and more preferably 0.001 to 10 mol%, of the groups represented by R are alkenyl groups. Further, it is preferable that at least 80 mol% of all the R groups are methyl groups, more preferable that at least 90 mol% are methyl groups, and particularly desirable that all of the R groups besides the alkenyl groups are methyl groups.

In the above formula (I), a is a positive number within a range from 1.95 to 2.05, and preferably from 1.98 to 2.02. The component (A) is basically a linear diorganopolysiloxane, but may include some branching provided the rubber elasticity is not impaired. If the value of a falls outside the range from 1.95 to 2.05, then the resulting cured product may not exhibit satisfactory rubber elasticity.

As mentioned above, the organopolysiloxane of the component (A) must have at least two alkenyl groups within each molecule, and in the formula (I), 0.0001 to 20 mol% of the R groups, preferably 0.001 to 10 mol% of the R groups, and more preferably 0.01 to 5 mol% of the R groups, are alkenyl groups. The alkenyl groups are preferably vinyl groups or allyl groups, and most preferably vinyl groups. These alkenyl groups may be bonded to silicon atoms at the molecular chain terminals, to silicon atoms at non-terminal positions (within the molecular chain), or to both these types of silicon atoms, but are preferably bonded to at least the silicon atoms at the molecular chain terminals.

There are no particular limitations on the organopolysiloxane, provided it satisfies the conditions described above, but typically, linear diorganopolysiloxanes in which the main chain is composed of repeating diorganosiloxane units (R₂SiO_{2/2}) and both molecular chain terminals are blocked with triorganosiloxy groups (R₃SiO_{1/2}) are preferred, compounds in which both molecular chain terminals are blocked with trimethylsiloxy groups, dimethylvinylsiloxy groups, methyldivinylsiloxy groups or trivinylsiloxy groups are more preferred, and compounds in which both molecular chain terminals are blocked with a siloxy group having at least one vinyl group are particularly desirable.

Further, in terms of the diorganosiloxane units (R₂SiO_{2/2}) within the main chain, organopolysiloxanes in which the main chain is composed solely of dimethylsiloxane units, or organopolysiloxanes in which one or more diphenylsiloxane units, methylphenylsiloxane units, methylvinylsiloxane units or methyl-3,3,3-trifluoropropylsiloxane units or the like have been introduced into a portion of the dimethylpolysiloxane structure composed of the repeating dimethylsiloxane units are preferred.

The polymerization degree of the organopolysiloxane of the component (A) is at least 100 (typically within a range from 100 to 1,000,000), and is preferably within a range from 1,000 to 100,000, more preferably from 3,000 to 50,000, and still more preferably from 4,000 to 20,000. If the polymerization degree is less than 100, then satisfactory rubber strength is unobtainable. This polymerization degree can be determined, for example, as a polystyrene-equivalent number-average polymerization degree obtained by GPC (gel permeation chromatography) analysis using toluene as the eluent.

These types of organopolysiloxanes can be obtained by conventional methods, for example by performing a (co)hydrolysis-condensation of one or more organohalogenosilanes, or by performing a ring-opening polymerization of a cyclic polysiloxane using an alkaline or acid catalyst. A single organopolysiloxane may be used as the organopolysiloxane of the component (A), or two or more organopolysiloxanes having different polymerization degrees or molecular structures may be used in combination.

### [Component (B)]

The reinforcing silica of the component (B) is a material in which a plurality of silanol groups (SiOH) exist at the surface of the silica, and is a component that imparts the resulting silicone rubber with excellent mechanical properties. Examples of the reinforcing silica include pyrogenic silica, precipitated silica (wet silica) and fumed silica (dry silica), and in terms of heat resistance, fumed silica is preferred. The specific surface area of the reinforcing silica determined by the BET method must be at least 50 m²/g, and is preferably within a range from 100 to 400 m²/g. If this specific surface area is less than 50 m²/g, then the reinforcing effect is insufficient. If necessary, a reinforcing silica that has been surface treated with an organopolysilazane such as hexamethyldisilazane, an (organo)chlorosilane, an (organo)alkoxysilane or an organopolysiloxane or the like may be used. A single reinforcing silica may be used alone, or two or more reinforcing silicas may be used in combination.

The amount added of the reinforcing silica of the component (B) is typically within a range from 10 to 100 parts by mass, preferably from 20 to 70 parts by mass, and more preferably from 30 to 60 parts by mass, per 100 parts by mass of the organopolysiloxane of the component (A). If the amount is less than 10 parts by mass, then the amount is insufficient and a satisfactory reinforcing effect cannot be achieved, whereas if the amount exceeds 100 parts by mass, then the workability worsens or the mechanical strength deteriorates.

### [Component (C)]

The zirconia-ceria solid solution of the component (C) (namely a solid solution of zirconium oxide (ZrO₂)-cerium oxide (CeO₂)) is a characteristic feature of the present invention, and is a component that dramatically improves the heat resistance of the silicone rubber. Cerium oxide (ceria) is already known as a heat resistance improver for silicone rubbers, but by including the ceria in the form of a solid solution with zirconia, the oxygen storage capacity is improved beyond that achievable with only ceria (cerium oxide). By using this zirconia-ceria solid solution having an improved oxygen storage capacity, the present invention is able to suppress thermal degradation of the silicone rubber markedly better than has conventionally been possible.

The amount of zirconium oxide (ZrO₂) within the solid solution of the component (C) is preferably within a range from 5 to 95 mol% (meaning the amount of cerium oxide (CeO₂) within the solid solution is within a range from 95 to 5 mol%). The amount of zirconium oxide (ZrO₂) within the zirconia-ceria solid solution is preferably within a range from a lower limit of any one of 5, 10, 15, 20 and 25 mol%, to an upper limit of any one of 95, 92, 90 and 88 mol%. If the amount of the zirconium oxide (ZrO₂) is less than 5 mol%, then the effects targeted by the present invention are unobtainable. In contrast, if the amount exceeds 95 mol%, then the amount of cerium oxide becomes too small, and the desired heat resistance cannot be achieved.

The zirconia-ceria solid solution is preferably a fine powder having a cumulative weight-average diameter D₅₀ (or median diameter), determined by measuring the particle size distribution by a laser diffraction method, of not more than 50 µm, preferably within a range from 0.05 to 20 µm, and more preferably from approximately 0.1 to 15 µm. If this average particle diameter is too large, then the physical strength of the rubber cured product containing the solid solution may deteriorate.

The amount added of the component (C) is typically within a range from 0.01 to 10 parts by mass, and is preferably from 0.05 to 5 parts by mass, per 100 parts by mass of the organopolysiloxane of the component (A). If the amount is less than 0.01 parts by mass, then the effect of the component (C) in improving the heat resistance is minimal, whereas if the amount exceeds 10 parts by mass, then the physical properties of the silicone rubber such as the strength and the elongation tend to deteriorate.

### [Component (D)]

There are no particular limitations on the curing agent of the component (D), provided it is capable of curing the rubber composition of the present invention. Accordingly, conventional organic peroxide vulcanizing agents or addition vulcanizing agents that are typically used for silicone rubbers may be used.

### - Organic Peroxide Vulcanizing Agent

An organic peroxide may be used as the vulcanizing agent. Examples of the organic peroxide include benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate and 1,6-hexanediol bis-t-butylperoxycarbonate. These compounds may be used individually, or two or more compounds may be used in combination.

The amount added of the organic peroxide need only be sufficient to ensure curing of the silicone rubber composition, and is typically within a range from 0.1 to 10 parts by mass, and preferably from 0.2 to 5 parts by mass, per 100 parts by mass of the component (A).

### - Addition Vulcanizing Agent

An addition vulcanizing agent is used in those cases where the composition of the present invention cures via an addition reaction, and is composed of a combination of an organohydrogenpolysiloxane (cross-linking agent) and a platinum group metal-based catalyst (hydrosilylation addition reaction catalyst). Examples of the platinum group metal-based catalyst include simple elemental platinum, platinum compounds, platinum complexes, chloroplatinic acid, alcohol compounds, aldehyde compounds and ether compounds of chloroplatinic acid, and complexes of chloroplatinic acid with various olefins. The amount added of the platinum group metal-based catalyst, reported as a mass of the platinum group metal atoms relative to the mass of the organopolysiloxane of the component (A), is typically within a range from 1 to 2,000 ppm, and preferably from 2 to 500 ppm (by mass).

On the other hand, the organohydrogenpolysiloxane used as the addition vulcanizing agent (cross-linking agent) is an organohydrogenpolysiloxane having at least two hydrogen atoms bonded to silicon atoms (SiH groups) within each molecule, which acts as a cross-linking agent by causing a hydrosilylation addition reaction between the SiH groups within the organohydrogenpolysiloxane and the silicon atom-bonded alkenyl groups in the component (A). There are no particular limitations on the molecular structure of this organohydrogenpolysiloxane, and conventionally used linear, cyclic, branched or three-dimensional network (resin-like) structures can be used, although the organohydrogenpolysiloxane must have at least two hydrogen atoms bonded to silicon atoms (SiH groups) within each molecule, and preferably contains 2 to 200 SiH groups, and more preferably 3 to 100 SiH groups. Compounds represented by an average composition formula (II) shown below may be used as the organohydrogenpolysiloxane.

R¹_{b}H_{c}SiO_{(4-b-c)/2} (II)

In the formula (II), R¹ represents an unsubstituted or substituted monovalent hydrocarbon group of 1 to 10 carbon atoms. Examples of R¹ include the same groups as those described above for R in the formula (I), but groups that do not contain aliphatic unsaturated bonds (groups other than alkenyl groups) are preferred. Further, b is a positive number of 0.7 to 2.1, c is a positive number of 0.001 to 1.0, and b+c satisfies a range from 0.8 to 3.0, and in a preferred compound, b is a positive number of 1.0 to 2.0, c is a positive number of 0.01 to 1.0, and b+c satisfies a range from 1.5 to 2.5.

The two or more, and preferably three or more, SiH groups contained within the molecule may be positioned at the molecular chain terminals, at non-terminal positions within the molecular chain, or at both of these positions. Further, the molecular structure of the organohydrogenpolysiloxane may be a linear, cyclic, branched or three dimensional network structure, but an organohydrogenpolysiloxane that is a liquid at room temperature (25°C), and in which the number of silicon atoms within a single molecule (namely, the polymerization degree) is typically within a range from 2 to 300, and preferably from 4 to approximately 150 is particularly desirable.

Specific examples of the organohydrogenpolysiloxane represented by the formula (II) include 1,1,3,3-tetramethyldisiloxane, 1,3,5,7-tetrahydrogen-1,3,5,7-tetramethylcyclotetrasiloxane, 1-propyl-3,5,7-trihydrogen-1,3,5,7-tetramethylcyclotetrasiloxane, 1,5-dihydrogen-3,7-dihexyl-1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of dimethylsiloxane and methylhydrogensiloxane with both terminals blocked with trimethylsiloxy groups, dimethylpolysiloxane with both terminals blocked with dimethylhydrogensiloxy groups, copolymers of dimethylsiloxane and methylhydrogensiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, dimethylsiloxane and diphenylsiloxane with both terminals blocked with dimethylhydrogensiloxy groups, copolymers of methylhydrogensiloxane, dimethylsiloxane and methylphenylsiloxane with both terminals blocked with dimethylhydrogensiloxy groups, copolymers composed of (CH₃)₂HSiO_{1/2} units, (CH₃)₃SiO_{1/2} units and SiO_{4/2} units, copolymers composed of (CH₃)₂HSiO_{1/2} units and SiO_{4/2} units (low-viscosity fluids), and copolymers composed of (CH₃)₂HSiO_{1/2} units, SiO_{4/2} units, and (C₆H₅)₃SiO_{1/2} units.

The amount added of this organohydrogenpolysiloxane is sufficient that the molar ratio of hydrogen atoms bonded to silicon atoms within the organohydrogenpolysiloxane relative to alkenyl groups bonded to silicon atoms within the component (A) is within a range from 0.5 to 5, and preferably from 0.8 to 3. If this molar ratio is less than 0.5, then the cross-linking density is too low, which has an adverse effect on the heat resistance of the cured silicone rubber. Further, if the molar ratio exceeds 5, then foaming caused by a dehydrogenation reaction tends to occur, and the heat resistance also tends to deteriorate. A single organohydrogenpolysiloxane may be used as the cross-linking agent of the addition vulcanizing agent (curing agent), or two ore more organohydrogenpolysiloxanes may be used in combination.

### [Optional Components]

In addition to the components described above, the silicone rubber composition of the present invention may also include other components if necessary.

### - Component (E)

The composition preferably includes an organosilane and/or an organosiloxane represented by a general formula (III) shown below as a component (E). This component (E) is an organosilane having two silanol groups (hydroxyl groups bonded to silicon atoms) and/or alkoxy groups within the molecule, a diorganopolysiloxane in which both molecular chain terminals are blocked with silanol groups or alkoxy groups, or a combination thereof. The component (E) functions as a dispersant (wetter) for improving the dispersibility of the reinforcing silica of the component (B) and/or the zirconia-ceria solid solution of the component (C) within the component (A), and by adding this component (E), the workability and extrusion properties and the like of the silicone rubber composition of the present invention can be improved.

R₂O(Si(R³)₂O)ₘR² (III)

In the formula, R² represents identical or different alkyl groups or a hydrogen atom, R³ represents identical or different, unsubstituted or substituted monovalent hydrocarbon groups, and m represents a positive integer of 1 to 50.

R² represents identical or different alkyl groups or a hydrogen atom, so that the organosilane or organosiloxane represented by the general formula (III) has alkoxy groups or hydroxyl groups at the molecular chain terminals. Specific examples of R² include a hydrogen atom and alkyl groups of 1 to 4 carbon atoms such as a methyl group, ethyl group, propyl group and butyl group, but a methyl group, ethyl group or hydrogen atom is preferred. The R³ groups typically contain 1 to 12 carbon atoms, and preferably 1 to 8 carbon atoms, and specific examples include alkyl groups such as a methyl group, ethyl group, propyl group and butyl group, cycloalkyl groups such as a cyclohexyl group, alkenyl groups such as a vinyl group, allyl group, butenyl group and hexenyl group, aryl groups such as a phenyl group and tolyl group, aralkyl groups such as a β-phenylpropyl group, and groups in which some or all of the hydrogen atoms bonded to carbon atoms within one of these groups have each been substituted with a halogen atom or a cyano group or the like, such as a chloromethyl group, trifluoropropyl group and cyanoethyl group. Of these, a methyl group, vinyl group, phenyl group or trifluoropropyl group is preferred, and a methyl group or vinyl group is particularly desirable.

m represents a positive integer of 1 to 50, and is preferably from 1 to 30, and more preferably from 1 to 20. If m exceeds 50, then the effect of adding the component (E) is insufficient unless a very large amount is added, and if the amount added is too large, the rubber properties may deteriorate.

The amount added of the optional component (E) is typically not more than approximately 50 parts by mass (namely, 0 to 50 parts by mass) per 100 parts by mass of the component (A), and when added, the amount of the component (E) is typically within a range from 0.1 to 50 parts by mass, and preferably from 0.5 to 30 parts by mass, per 100 parts by mass of the component (A). If the amount is less than 0.1 parts by mass, then the effect of adding the component may be unsatisfactory, whereas if the amount exceeds 50 parts by mass, then the resulting rubber composition may develop tack, resulting in a deterioration in workability, and the rubber properties of the resulting rubber may deteriorate.

### - Other Optional Components

In addition to the components described above, the types of conventional additives typically included within silicone rubber compositions may, if necessary, be added to the silicone rubber composition of the present invention as optional components, provided they do not impair the effects of the present invention. Examples of these additives include flame retardancy-imparting agents and heat resistance improvers such as platinum compounds, iron oxides and halogen compounds, age resistors, ultraviolet absorbers, colorants and release agents.

### [Preparation and Curing of the Composition]

There are no particular limitations on the method used for producing the silicone rubber composition of the present invention, and the composition can be obtained by kneading predetermined amounts of the above components using a conventional mixing device such as a twin roll mill, a kneader or a Banbury mixer. Further, a heat treatment (kneading under heat) may be performed if required. Specifically, a method in which the components (A) and (B) are kneaded together, a heat treatment is performed if required, and the component (D) is then added at room temperature is preferred. In this case, the component (C) may be added before the heat treatment or added after the heat treatment. When a heat treatment is performed, although there are no particular limitations on the heat treatment temperature and time, the heat treatment is preferably performed at a temperature of 100 to 250°C, and more preferably 140 to 180°C, for a period of approximately 30 minutes to 5 hours.

With the silicone rubber composition of the present invention, the molding method used may be selected in accordance with the required application (molded item). Specific examples of the molding method include compression molding, injection molding, transfer molding, normal-pressure hot-air vulcanization, and steam vulcanization. There are no particular limitations on the curing conditions, which may be selected appropriately in accordance with the curing method and the molded item, but curing is generally conducted at a temperature of 80 to 600°C, and preferably 100 to 450°C, for a period of several seconds to several days, and preferably 5 seconds to approximately one hour. Further, secondary vulcanization may be performed if required. Secondary vulcanization is typically conducted at 180 to 250°C for a period of approximately 1 to 10 hours.

### EXAMPLES

A description of specifics of the present invention is presented below based on a series of examples and comparative examples. In the following examples, the units "parts" refer to "parts by mass". Further, the composition ratio of the zirconia-ceria solid solution is expressed as a molar ratio.

### [Example 1]

100 parts of an organopolysiloxane composed of 99.825 mol% of dimethylsiloxane units, 0.15 mol% of methylvinylsiloxane units and 0.025 mol% of dimethylvinylsiloxane units, and having an average polymerization degree of approximately 7,000, 45 parts of a fumed silica having a specific surface area (BET method) of 200 m²/g (Aerosil 200, manufactured by Nippon Aerosil Co., Ltd.), and 10 parts of a dimethylpolysiloxane having silanol groups at both terminals and having a polymerization degree of 10 were mixed together using a kneader, and the mixture was then subjected to a heat treatment at 150°C for 2 hours to complete preparation of a silicone rubber compound.

Using a twin roll mill, 0.8 parts of a zirconia-ceria solid solution (product name: cerium oxide CZ, manufactured by Anan Kasei Co., Ltd., average particle diameter: 11 µm, ceria/zirconia ratio (composition ratio) = 75/25) was added to the prepared rubber compound, and 0.5 parts of 2,5-dimethyl-2,5-bis(t-butylperoxy)hexane, was then added to complete preparation of a silicone rubber composition. The composition was press molded under conditions including a primary vulcanization at 170°C for 10 minutes and a secondary vulcanization at 200°C for 2 hours to prepare a silicone rubber sheet having a thickness of 2 mm, and the hardness (durometer A), the tensile strength and the breaking elongation (initial physical properties) were measured in accordance with JIS K6249. Further, the rubber physical properties were also measured after the sheet had been inserted in a dryer at 250°C for 3 days (heat-resistant physical properties). The results are shown in Table 1.

### [Comparative Example 1]

With the exception of replacing the zirconia-ceria solid solution (cerium oxide CZ) from the example 1 with an equal mass of commercially available ceria (product name: cerium oxide S, manufactured by Anan Kasei Co., Ltd., purity: at least 99.9%, average particle diameter: 0.18 µm), a silicone rubber composition was prepared in the same manner as the example 1. The thus obtained composition was cured in the same manner as the example 1, and the rubber physical properties were then measured. The results are shown in Table 1.

### [Comparative Example 2]

With the exception of adding absolutely none of the zirconia-ceria solid solution, a silicone rubber composition was prepared in the same manner as the example 1. The thus obtained composition was cured in the same manner as the example 1, and the rubber physical properties were then measured. The results are shown in Table 1.

**[Table 1]**

| | | Example 1 | Comparative example 1 | Comparative example 2 |
|---|---|---|---|---|
| Zirconia-ceria solid solution or ceria | | Zirconia-ceria solid solution (cerium oxide CZ) | Ceria (cerium oxide S) | None |
| Initial physical properties | Hardness | 60 | 60 | 60 |
| | Tensile strength (MPa) | 9.9 | 9.4 | 10.4 |
| | Breaking elongation (%) | 430 | 450 | 480 |
| Heat-resistant physical properties (250°C/3 days) | Hardness | 62 | 63 | 66 |
| | Tensile strength (MPa) | 8.0 | 6.3 | 5.3 |
| | Breaking elongation (%) | 350 | 280 | 180 |

### [Example 2]

100 parts of a methylvinylpolysiloxane crude rubber composed of 99.85 mol% of (CH₃)₂SiO units and 0.15 mol% of (CH₃)(CH₂=CH)SiO units, having the molecular chain terminals blocked with (CH₂=CH)(CH₃)₂SiO units and having an average polymerization degree of approximately 7,000, 45 parts of a fumed silica having a specific surface area (BET method) of 300 m²/g (Aerosil 300, manufactured by Nippon Aerosil Co., Ltd.), and 8 parts of hexamethyldisilazane were mixed uniformly together using a kneader-mixer, and the mixture was then subjected to further mixing under heat at 150°C for one hour to complete preparation of a silicone rubber compound.

Using a twin roll mill, 1.0 parts of a zirconia-ceria solid solution (product name: Cerium Zirconium Oxide, manufactured by Alfa Aesar, average particle diameter: 2.4 µm, ceria/zirconia (composition ratio) = 12/88) was added to the prepared rubber compound, and 0.5 parts of 2,5-dimethyl-2,5-bis(t-butylperoxy)hexane, was then added to complete preparation of a silicone rubber composition.

This composition was press molded under the same conditions as the example 1, including a primary vulcanization at 170°C for 10 minutes and a secondary vulcanization at 200°C for 2 hours to prepare a silicone rubber sheet having a thickness of 2 mm, and the hardness (durometer A), the tensile strength and the breaking elongation (initial physical properties) were measured in accordance with JIS K6249. Further, the rubber physical properties were also measured after the sheet had been inserted in a dryer at 250°C for 3 days (heat-resistant physical properties).

### [Comparative Example 3]

With the exception of altering the amount added of the zirconia-ceria solid solution (Cerium Zirconium Oxide) to 0.001 parts, a silicone rubber composition was prepared in the same manner as the example 2. This composition was press molded under the same conditions as the example 2, including a primary vulcanization at 170°C for 10 minutes and a secondary vulcanization at 200°C for 2 hours to prepare a silicone rubber sheet having a thickness of 2 mm, and the initial physical properties and the physical properties following insertion in a dryer at 250°C for 3 days (heat-resistant physical properties) were measured in the same manner as the example 2. The results are shown in Table 2.

**[Table 2]**

| | | Example 2 | Comparative example 3 |
|---|---|---|---|
| Amount of zirconia-ceria solid solution (parts by mass) | | 1.0 | 0.001 |
| Initial physical properties | Hardness | 65 | 65 |
| | Tensile strength (MPa) | 12.0 | 11.8 |
| | Breaking elongation (%) | 430 | 450 |
| Heat-resistant physical properties (250°C/3 days) | Hardness | 68 | 70 |
| | Tensile strength (MPa) | 10.0 | 6.4 |
| | Breaking elongation (%) | 330 | 220 |

### [Industrial Applicability]

The silicone rubber composition of the present invention is useful in applications that require a high degree of heat resistance, and for example, can be widely used in various fields such as electrical machinery, automobiles, construction, medical treatment and foodstuffs. More specifically, the silicone rubber composition of the present invention is useful for the rubber contacts which function as rubber contact points in remote controllers, type writers, word processors, computer terminals and musical instruments and the like, for construction gaskets, for the rollers used in office equipment, such as fixing rollers, developing rollers, transfer rollers, charge rollers and paper-feed rollers, for anti-vibration rubbers in audio devices and the like, for packing for use in compact discs, and for coating materials for electrical wires and the like. 1

## Claims

1. A silicone rubber composition comprising:
(A) 100 parts by mass of an organopolysiloxane having a polymerization degree of at least 100 and containing at least two alkenyl groups bonded to silicon atoms within each molecule,
(B) 10 to 100 parts by mass of a reinforcing silica having a specific surface area measured by a BET method of at least 50 m²/g,
(C) 0.01 to 10 parts by mass of a zirconia-ceria solid solution, and
(D) an effective amount of a curing agent composed of
(D1) an organic peroxide in an amount within a range from 0.1 to 10 parts by mass relative to 100 parts by mass of the component (A), or
(D2) a combination of an organohydrogenpolysiloxane and a platinum group metal-based catalyst, wherein the organohydrogenpolysiloxane contains at least two hydrogen atoms bonded to silicon atoms within each molecule and is included in an amount which provides a molar ratio of the hydrogen atoms bonded to silicon atoms within the organohydrogenpolysiloxane relative to the alkenyl groups bonded to silicon atoms within the component (A) within a range from 0.5 to 5, and wherein the amount of the platinum group metal-based catalyst, reported as a mass of the platinum group metal atoms relative to the mass of the organopolysiloxane of the component (A), is within a range from 1 to 2,000 ppm.

2. The composition according to claim 1, further comprising:
(E) an organosilane, an organosiloxane, or a combination thereof, which functions as a dispersant for improving dispersibility of the component (B) and/or the component (C) within the component (A).

3. The composition according to claim 2, wherein the component (E) is represented by a general formula (III) shown below:
R²O(Si(R³)₂O)ₘR² (III)
wherein R² represents identical or different alkyl groups or a hydrogen atom, R³ represents identical or different, unsubstituted or substituted monovalent hydrocarbon groups, and m represents a positive integer of 1 to 50.

4. The composition according to claim 1, wherein an amount of zirconium oxide (ZrO₂) within the solid solution of the component (C) is within a range from 5 to 95 mol%.

5. The composition according to claim 1, wherein an amount of the component (C) is within a range from 0.05 to 5 parts by mass, per 100 parts by mass of the component (A).

## Patentansprüche

1. Siliconkautschukzusammensetzung, umfassend:
(A)100 Masseteile eines Organopolysiloxans mit einem Polymerisationsgrad von mindestens 100, enthaltend wenigstens 2 an Si-Atome gebundene Alkenylgruppen in jedem Molekül,
(B) 10 - 100 Masseteile einer Verstärkerkieselerde mit einer spezifischen Oberfläche, gemessen nach der BET-Methode, von wenigstens 50 m²/g,
(C)0,01 - 10 Masseteile einer festen Zirkonerde-Ceroxid-Lösung und
(D)eine wirksame Menge eines Härters, zusammengesetzt aus
(D1) einem organischem Peroxid in einer Menge in einem Bereich von 0,1 - 10 Masseteilen, bezogen auf 100 Masseteile der Komponente (A) oder
(D2) einem Gemisch aus einem Organohydrogenpolysiloxan und einem Katalysator auf der Basis eines Metalls der Platingruppe, wobei das Organohydrogenopolysiloxan wenigstens 2 an Si-Atome gebundene Wasserstoffatome in jedem Molekül enthält und in einer Menge vorliegt, die ein Molarverhältnis der an die Si-Atome gebundenen Wasserstoffatome im Organohydrogenpolysiloxan, bezogen auf die an die Si-Atome in der Komponente (A) gebundenen Alkenylgruppen, in einem Bereich von 0,5 - 5 gewährleistet, wobei die Menge des Katalysators auf der Basis eines Metalls der Platingruppe, angegeben als Masse der Atome des Metalls der Platingruppe, bezogen auf die Masse des Organopolysiloxans der Komponente (A), in einem Bereich von 1 - 2000 ppm liegt.

2. Zusammensetzung nach Anspruch 1, ferner enthaltend:
(E) ein Organosilan, ein Organosiloxan oder ein Gemisch daraus, das als Dispergator zur Verbesserung der Dispergierbarkeit der Komponente (B) und/oder der Komponente (C) in der Komponente (A) fungiert.

3. Zusammensetzung nach Anspruch 2, wobei die Komponente (E) die allgemeine Formel (III):
R²O(Si(R³)₂O)ₘR² (III)
aufweist,
wobei R² gleiche oder unterschiedliche Alkylgruppen oder ein Wasserstoffatom bedeutet, R³ gleiche oder unterschiedliche unsubstituierte oder substituierte einwertige Kohlenwasserstoffgruppen bedeutet und m eine positive ganze Zahl von 1 - 50 bedeutet.

4. Zusammensetzung nach Anspruch 1, wobei die Menge an Zirconiumoxid (ZrO₂) in der festen Lösung der Komponente (C) in einem Bereich von 5 - 95 Mol.-% liegt.

5. Zusammensetzung nach Anspruch 1, wobei die Menge an Komponente (C) in einem Bereich von 0,05 - 5 Masseteilen pro 100 Masseteile der Komponente (A) liegt.

## Revendications

1. Composition de caoutchouc silicone comprenant :
(A) 100 parties en masse d'un organopolysiloxane possédant un degré de polymérisation d'au moins 100 et contenant au moins deux groupes alcényle liés à des atomes de silicium au sein de chaque molécule ;
(B) de 10 à 100 parties en masse d'une silice de renforcement possédant une aire de surface spécifique mesurée par le procédé BET d'au moins 50 m²/g ;
(C) de 0,01 à 10 parties en masse d'une solution d'un produit solide à base d'oxyde de zirconium-oxyde de cérium ; et
(D) une quantité efficace d'un agent de durcissement composé de :
(D1) un peroxyde organique en une quantité dans la plage de 0,1 à 10 parties en masse par rapport à 100 parties en masse du composant (A) ; ou
(D2) une combinaison d'un organohydrogénopolysiloxane et d'un catalyseur à base d'un métal du groupe du platine, dans laquelle l'organohydrogénopolysiloxane contient au moins deux atomes d'hydrogène liés à des atomes de silicium au sein de chaque molécule et est inclus en une quantité qui procure un rapport molaire des atomes d'hydrogène liés à des atomes de silicium au sein de l'organohydrogénopolysiloxane par rapport aux groupes alcényle liés à des atomes de silicium au sein du composant (A) dans la plage de 0,5 à 5, et dans laquelle la quantité du catalyseur à base d'un métal du groupe du platine, rapportée sous la forme d'une masse des atomes du métal du groupe du platine par rapport à la masse de l'organopolysiloxane du composant (A) se situe dans la plage de 1 à 2.000 ppm.

2. Composition selon la revendication 1, comprenant en outre :
(E) un organosilane, un organosiloxane ou une de leurs combinaisons, qui fait office d'agent de mise en dispersion pour améliorer la dispersibilité du composant (B) et/ou du composant (C) au sein du composant (A).

3. Composition selon la revendication 2, dans laquelle le composant (E) répond à la formule générale (III) représentée ci-dessous :
R₂O(Si(R³)₂O)ₘR² (III)
dans laquelle R² représente des groupes alkyle identiques ou différents ou un atome d'hydrogène, R³ représente des groupes hydrocarbonés monovalents identiques ou différents, non substitués ou substitués, et m représente un entier positif de 1 à 50.

4. Composition selon la revendication 1, dans laquelle la quantité d'oxyde de zirconium (ZrO₂) au sein de la solution de produit solide du composant (C) se situe dans la plage de 5 à 95 mol %.

5. Composition selon la revendication 1, dans laquelle la quantité du composant (C) se situe dans la plage de 0,05 à 5 parties en masse, par 100 parties en masse du composant (A).
